Europäisches Patentamt

European Patent Office

Office européen des brevets

(19)

(11) Veröffentlichungsnummer: **0 242 679 B1**

## (12) EUROPÄISCHE PATENTSCHRIFT

(45) Veröffentlichungstag der Patentschrift: **29.07.92**

(21) Anmeldenummer: **87105019.1**

(22) Anmeldetag: **04.04.87**

(51) Int. Cl.⁵: **B60Q 9/00**, G08B 1/00,
F41H 7/00

(54) Signaleinrichtung für Kampffahrzeuge, insbesondere für Kampfpanzer.

(30) Priorität: **24.04.86 DE 3613864**

(43) Veröffentlichungstag der Anmeldung:
**28.10.87 Patentblatt 87/44**

(45) Bekanntmachung des Hinweises auf die
Patenterteilung:
**29.07.92 Patentblatt 92/31**

(84) Benannte Vertragsstaaten:
**BE CH DE FR GB IT LI NL SE**

(56) Entgegenhaltungen:
**CH-A- 194 304**
**US-A- 4 357 595**

(73) Patentinhaber: **Wegmann & Co. GmbH**
**August-Bode-Strasse 1**
**W-3500 Kassel(DE)**

(72) Erfinder: **Liebel, Peter**
**Am Rande 14**
**W-3500 Kassel(DE)**
Erfinder: **Abels, Frank**
**Ellernbusch 9**
**W-3042 Munster(DE)**

(74) Vertreter: **Feder, Heinz, Dr. et al**
**Dipl.-Ing. P.-C. Sroka, Dr. H. Feder Dipl.-Phys.**
**Dr. W.-D. Feder, Patentanwälte Dominikaner-**
**strasse 37**
**W-4000 Düsseldorf 11(DE)**

EP 0 242 679 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Signaleinrichtung für Kampffahrzeuge, insbesondere für Kampfpanzer, mit einer Blinkvorrichtung, die ausschließlich Signale im Wärmebildspektrum abstrahlt.

Im Gefechtseinsatz ist es erforderlich, daß Kampffahrzeuge, insbesondere Kampfpanzer, zu Zwecken der Gefechtsaufklärung über die eigenen Linien fahren, um dann später nach Erfüllung ihres Auftrages wieder von den eigenen Truppen aufgenommen zu werden. Sofern dies bei Tage stattfindet, werden die eigenen Fahrzeuge bei der Rückkehr von den in Sicherung befindenden eigenen Truppen aufgrund ihrer Silhouette erkannt und deshalb nicht, obwohl vor den eigenen Linien befindlich, beschossen.

Bei Dunkelheit oder schlechter Sicht ist dieses Verfahren der Erkennung nicht anwendbar und es wurde in der Praxis mit Blinkleuchten und ähnlichen Einrichtungen, die im Bereich des sichtbaren Lichtes liegenden Signale abstrahlen, gearbeitet.

Diese bekannten Verfahren haben den wesentlichen Nachteil, daß auch der Feind mit bloßem Auge die Blinkzeichen erkennen kann und damit eine Gefährdung des blinkenden Fahrzeuges gegeben ist.

Seitdem bei den meisten modernen Armeen Wärmebildgeräte zur Aufklärung der Gefechtsverhältnisse bei Nacht eingesetzt werden, können zwar Fahrzeuge auf relativ große Entfernungen bei Dunkelheit entdeckt werden, jedoch ist die Identifizierung, ob es sich um feindliche oder eigene Fahrzeuge handelt, mit Hilfe des Wärmebildes kaum möglich, so daß für den Beobachter immer Zweifel bestehen, um was für ein Fahrzeug es sich im Vorfeld handelt.

Zur Behebung dieser Nachteile ist es gemäß einem älteren, nicht vorveröffentlichten Vorschlag möglich, eine Signaleinrichtung mit den eingangs und im Oberbegriff des Patentanspruchs 1 angegebenen Merkmalen vorzusehen, die den mit Wärmebildgeräten beobachtenden Truppen die Möglichkeit gibt, eindeutig zu unterscheiden, ob die sich annähernden Kampffahrzeuge im Vorfeld zu eigenen oder feindlichen Kräften gehören.

Mit einer solchen Signaleinrichtung ist es möglich, in einem als Code zu verstehenden Rhythmus die Blinkvorrichtung auf- oder abzublenden. Dies eröffnet die Möglichkeit, bei den eigenen Truppen im täglichen Wechsel einen bestimmten Auf- und Abblendecode festzulegen, aus dem die beobachtenden Truppen erkennen können, ob es sich bei einem sich nähernden Kampffahrzeug um eigene Kräfte handelt.

Die obengenannte ältere Signaleinrichtung besitzt eine Blinkvorrichtung, bei der das abstrahlende Element durch eine motorisch angetriebene Blende in vorgegebenen Richtungen und vorgegebenem Rhythmus abdeckbar ist. Das abstrahlende Element selbst ist als zylindrischer Körper ausgebildet, an dessen innerer Mantelfläche eine Heizmatte angeordnet ist und in dem ein Elektromotor angeordnet ist, dar eine außerhalb des Zylinderrohres angeordnete umlaufende Blende antreibt.

Bei dieser Signaleinrichtung nimmt das abstrahlende Element relativ viel Raum ein, was sich nachteilig auswirkt, wenn die Signaleinrichtung vom Kampffahrzeug abgenommen ist und etwa im Inneren des Fahrzeugs untergebracht werden soll. Außerdem müssen bei einem abstrahlenden Element dieser Konstruktion besonders sorgfältige Maßnahmen zur Wärmedämmung zwischen der Heizmatte und dem innerhalb der Heizmatte angeordneten Elektromotor vorgesehen sein.

Die der Erfindung zugrunde liegende Aufgabe bestand darin, eine Signaleinrichtung der eingangs erwähnten Art so auszubilden, daß das abstrahlende Element möglichst wenig Raum einnimmt und die ganze Einrichtung auf möglichst kleinem Raum verstaubar ist.

Die Lösung dieser Aufgabe erfolgt erfindungsgemäß mit den Merkmalen aus dem kennzeichnenden Teil des Patentanspruchs 1.

Vorteilhafte Ausführungsformen der erfindungsgemäßen Signaleinrichtung sind in den Unteransprüchen beschrieben.

Das abstrahlende Element ist bei der erfindungsgemäßen Signaleinrichtung an die Verhältnisse, die bei einer Abstrahlung im Wärmebildspektrum vorherrschen, besonders gut angepaßt. Durch die Ausbildung des abstrahlenden Elementes als flache Platte, was beispielsweise bei einer Blinkvorrichtung, die im Bereich des sichtbaren Lichtes abstrahlt, nicht ohne weiteres möglich wäre, ist es nicht notwendig, zur Abdeckung des abstrahlenden Elementes in einem vorgegebenen Rhythmus eine zusätzliche motorisch angetriebene Blende vorzusehen. Vielmehr ergibt sich durch die Drehbewegung des abstrahlenden Elementes selbst, daß jeweils nur in einer Richtung senkrecht zur Abstrahlfläche abgestrahlt wird, während in der Ebene der Abstrahlfläche, also in Richtung der Schmalseiten der Platte, kaum eine Abstrahlung erfolgt. Dies hat zur Folge, daß bei einer Drehung der Platte aus der Sicht eines entfernt stehenden Beobachters die Wärmequelle scheinbar rhythmisch abgedeckt wird und pulsierend erscheint.

Der vorzusehende Code wird vorteilhaft durch ein elektrisches Steuergerät, beispielsweise ein an sich bekanntes programmierbares Regelgerät, erzeugt, mit dessen Hilfe einprogrammiert werden kann, wieviele Umdrehungen die Platte machen soll und welche Pausenlängen zwischen den Umdrehungen auftreten sollen.

Bei einer vorteilhaften Ausführungsform der Signaleinrichtung kann eine, etwa die Hälfte des Abstrahlbereiches des abstrahlenden Elementes abdeckende Blende vorgesehen sein, durch die verhindert wird, daß in eine ungewünschte Richtung ein Wärmebildsignal abgegeben wird. Diese zusätzliche Blende kann (Patentanspruch 3) so ausgebildet sein, daß sie zusammenfaltbar ist. Auf diese Weise wird erreicht, daß beim Abnehmen und Zerlegen der Signaleinrichtung weder das abstrahlende Element noch die umgebende Blende viel Raum einnehmen.

Im folgenden wird ein Ausführungsbeispiel für eine Signaleinrichtung nach der Erfindung anhand der Zeichnungen erläutert.

In den Zeichnungen zeigen:

Fig. 1　in perspektivischer Darstellung einen Kampfpanzer mit darüber angeordneter vergrößert dargestellter Signaleinrichtung;

Fig. 2　einen Schnitt durch die Blinkvorrichtung der Signaleinrichtung nach Fig. 1;

Fig. 3　in einer Draufsicht eine elektrische Steuereinrichtung für die Signaleinrichtung nach Fig. 1 und 2.

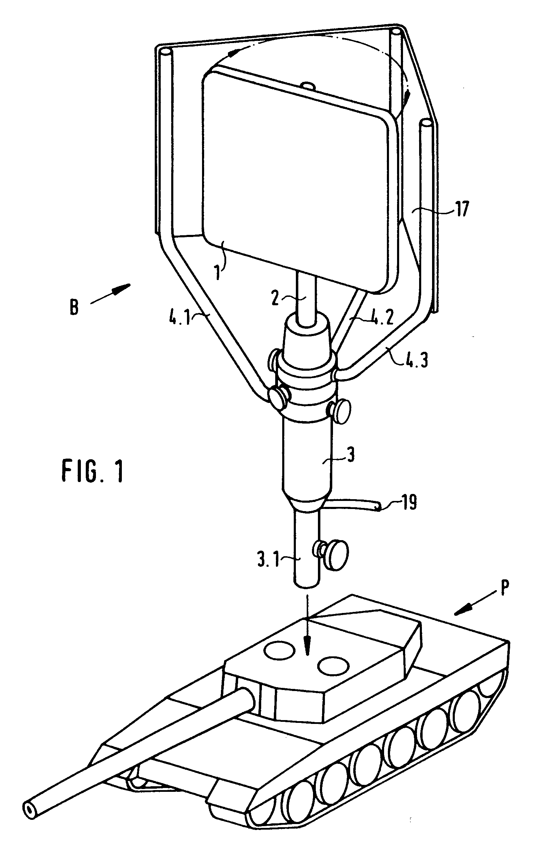

Wie in Fig. 1 angedeutet, ist auf einem Kampfpanzer P herkömmlicher Bauart, beispielsweise auf der Turmmitte, die Blinkvorrichtung B einer Signaleinrichtung angeordnet, die über ein Anschlußkabel 19 mit einer elektrischen Steuereinrichtung im Turminneren verbunden ist.

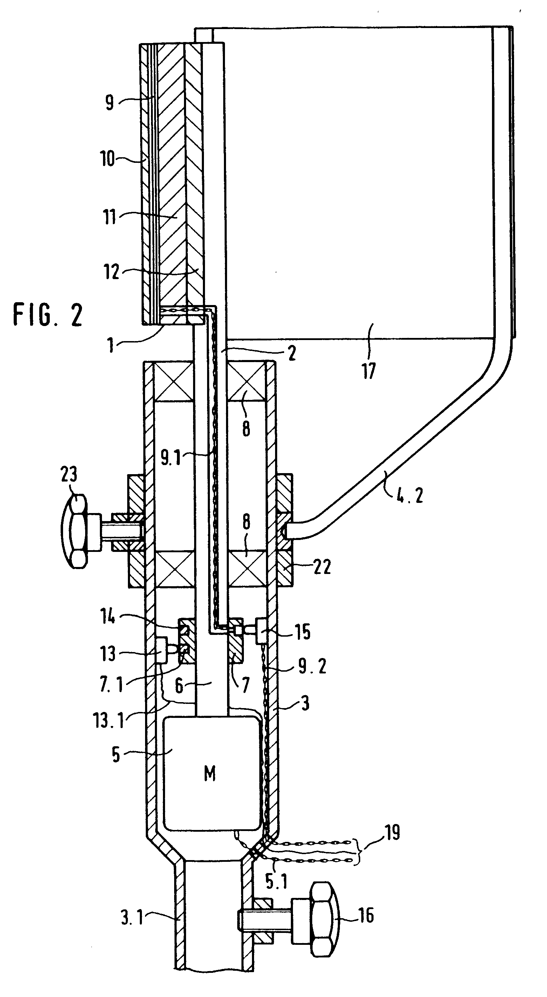

Wie aus den Fig. 1 und 2 ersichtlich, besitzt die Blinkvorrichtung B eine Halterohr 3, das mittels eines Ansatzstückes 3.1 auf ein entsprechendes Bauteil am Kampfpanzer P aufsteckbar und mittels einer Schraubverbindung 16 festlegbar ist. Innerhalb des Halterohrs 3 ist ein Elektromotor 5 angeordnet, dessen Abtriebswelle 6 fest mit einer axial durch das Halterohr 3 geführten Antriebswelle verbunden ist, die innerhalb des Halterohrs 3 über Drehlager 8 gelagert ist und am oberen Ende des Halterohrs 3 aus diesem herausgeführt ist. Am freien, aus dem Halterohr 3 herausgeführten Ende der Antriebswelle ist als abstrahlendes Element eine flache Platte 1 angeordnet, die, wie aus Fig. 2 ersichtlich, aus mehreren Schichten aufgebaut ist. Auf einer Grundplatte 12 ist zunächst eine isolierende Schicht 11 angeordnet, auf die eine elektrische Heizmatte 9 aufgelegt ist. An der Außenseite ist auf die Heizmatte 9 eine gut abstrahlende Schutzschicht 10 aufgelegt.

Die abstrahlende Fläche liegt somit parallel zur Antriebswelle 2 und die Abstrahlung erfolgt jeweils senkrecht zur Mittelachse dieser Antriebswelle.

Die Zuleitung 9.1 zur Heizmatte 9 ist durch die Antriebswelle 2 hindurchgeführt bis zu einem Ring 7 aus isolierendem Material und dort mit einem Schleifring 14 verbunden, dem ein an der Innenwand des Halterohrs 3 angeordneter Schleifkontakt 15 gegenüberliegt, an den eine Zuleitung 9.2 angeschlossen ist.

In dem zusammen mit der Antriebswelle 2 rotierenden Ring 7 ist weiterhin ein Kontaktelement 7.1 vorgesehen, dem ein Sensor 13 gegenüberliegt, der über eine Leitung 13.1 beim Rotieren der Antriebswelle 2 ein Signal abgibt, welches ein Maß für die Umlauffrequenz darstellt. Da es an dieser Stelle nur darauf ankommt, Signale mit der Umlauffrequenz zu erzeugen, kann dieser Sensor 13 sehr verschiedenartig aufgebaut sein. So kann beispielsweise der Sensor 13 als Schleifkontakt ausgebildet sein und das Kontaktstück 7.1 ist entweder mit Masse oder mit dem Schleifring 14 verbunden. Es kann aber auch das Kontaktstück 7.1 als Permanentmagnet und der Sensor 13 als Reed-Kontakt ausgebildet sein.

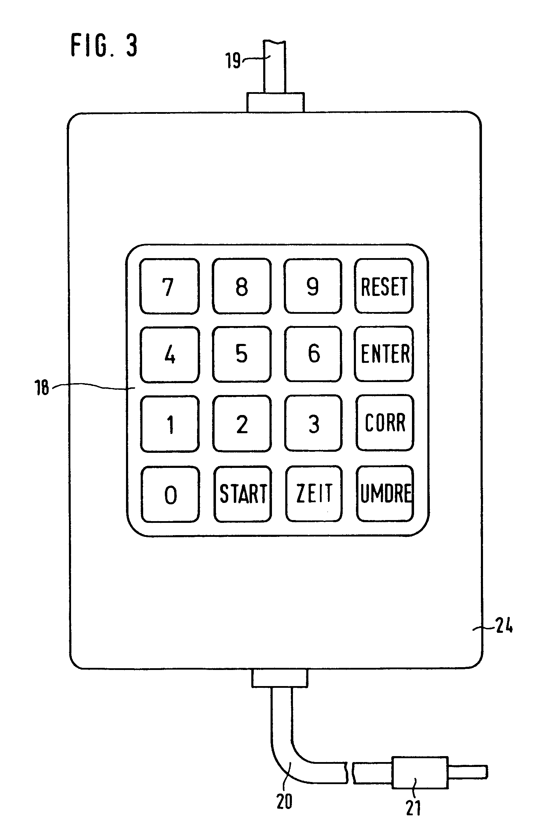

Die Leitungen 9.2 und 13.1 sowie die Zuleitung 5.1 zum Motor 5 sind aus dem Halterohr 3 als gemeinsames Anschlußkabel 19 herausgeführt, das, wie aus Fig. 3 ersichtlich, zu einer Steuereinrichtung 24 führt.

Außerhalb des Drehbereichs der Platte 1 ist eine zusätzliche Blende 17 angeordnet, die eine Abstrahlung in eine unerwünschte Richtung verhindern soll. Diese Blende 17 besteht aus einem Streifen aus flexiblem faltbarem Material, der an Spannstäben 4.1, 4.2 und 4.3 befestigt ist, deren abgebogene Enden mit einem Halterungsring 22 verbunden sind, der auf das Halterohr 3 aufgesteckt ist und an diesem über eine Schraubverbindung 23 festlegbar ist. Die Blende 17 kann nach Lösen der Schraubverbindung 23 um die Mittelachse des Halterohrs 3 verschwenkt werden. Wenn, wie aus Fig. 1 zu entnehmen, der Ring 22 aus drei übereinander angeordneten Einzelringen besteht, von denen jeder mit einem der Spannstäbe 4.1 bis 4.3 verbunden ist, ist es möglich, die Spannstäbe 4.1 bis 4.3 beim Auseinandernehmen der Einrichtung einzeln abzunehmen. Die Blende 17 mit den Spannstäben 4.1 bis 4.3 kann dann zusammengefaltet und ohne großen Raumbedarf verstaut werden.

Die im Inneren des Kampfpanzers P angeordnete elektrische Steuereinrichtung ist in Fig. 3 dargestellt. Sie weist ein programmierbares Regelgerät 24 herkömmlicher Bauart auf mit einem Bedienungsfeld 18, dem Steuerkabel 19 und einem Stromversorgungskabel 20 mit Bordstecker 21.

Die Funktionsweise der in den Fig. 1 bis 3 dargestellten Vorrichtung ist folgende:

Der Strom aus dem Bordnetz des Kampfpanzers P fließt beim Einschalten der Anlage über das Kabel 19 zur Heizmatte 9, die die Schutzschicht 10 erwärmt. Von der erwärmten Abstrahlfläche der Schutzschicht 10 geht die Wärmestrahlung nach außen, so daß sie von Wärmebildgeräten aufgenommen werden kann. Die Platte 1 dreht sich in gewünschter Häufigkeit um die Achse 2 der Antriebswelle, indem der Elektromotor 5 für eine vorgegebene Zeit mit Strom versorgt wird. Die Anzahl der Drehungen wird durch den Sensor 13 registriert, wobei entsprechende Signale erzeugt und dem Regelgerät 24 zugeführt werden.

Am Bedienungsfeld 18 des Regelgerätes 24 können Steuerbefehle eingegeben werden. Das als übliches 16-Tastenfeld ausgebildete Bedienungsfeld enthält Zahlentasten 0 bis 9 sowie Funktionstasten, mit denen eine Vorgabe der Zeit und der Umdrehungen, Start und Rücksetzen der Einrichtung sowie die Vornahme von Korrekturen möglich ist.

Der Elektromotor 5 läuft solange bis die Anzahl der am Regelgerät 24 einprogrammierten Umdrehungen registriert sind, dann schaltet der Elektromotor 5 ab und die am Regelgerät 24 vorgegebene Schaltdauerpause wird eingeleitet.

## Patentansprüche

1. Signaleinrichtung für Kampffahrzeuge, insbesondere für Kampfpanzer, mit einer Blinkvorrichtung, die ausschließlich Signale im Wärmebildspektrum abstrahlt, dadurch gekennzeichnet, daß das abstrahlende Element der Blinkvorrichtung als flache Platte (1) ausgebildet ist, deren Abstrahlfläche in einer vertikalen Ebene angeordnet ist und die motorisch angetrieben um eine vertikale Achse (2) drehbar ist.

2. Signaleinrichtung nach Anspruch 1, dadurch gekennzeichnet, daß die drehbare Platte (1) von einer außerhalb ihres Drehbereichs angeordneten, einen vorgegebenen Abstrahlwinkel abdeckenden festen Blende (17) umgeben ist.

3. Signaleinrichtung nach Anspruch 2, dadurch gekennzeichnet, daß die Blende (17) aus einem Streifen aus flexiblem faltbarem Material besteht, der an mit einer festen Halterung für die drehbare Platte (1) verbundenen Spannstäben (4.1 bis 4.3) befestigt ist.

4. Signaleinrichtung nach einem der Ansprüche 1 bis 3, dadurch gekennzeichnet, daß in der drehbaren Platte (1) an der Seite der Abstrahlfläche eine elektrisch beheizbare Heizmatte (9) angeordnet ist, deren durch die Antriebswelle der Platte (1) geführte Anschlußleitung über eine elektrisch leitende Drehverbindung (7-15) an eine Stromquelle angeschlossen ist.

5. Signaleinrichtung nach einem der Ansprüche 1 bis 4, dadurch gekennzeichnet, daß die Halterung der drehbaren Platte (1) als auf das Kampffahrzeug aufsteckbares Halterohr (3) ausgebildet ist, in dem ein Elektromotor (5) angeordnet ist, dessen Abtriebswelle (6) mit der axial durch das Halterohr (3) geführten und an seinem oberen Ende austretenden Antriebswelle für die Platte (1) verbunden ist.

6. Signaleinrichtung nach Anspruch 5, dadurch gekennzeichnet, daß zwischen dem Halterohr (3) und der Antriebswelle für die Platte (1) eine elektrische Sensorvorrichtung (13) angeordnet ist, die ein elektrisches Steuersignal abgibt, das ein Maß für die Umlauffrequenz der Platte (1) darstellt und einer Steuervorrichtung zugeführt wird.

## Claims

1. Signalling device for combat vehicles, particularly for tanks, comprising a flashing device which exclusively radiates signals in the thermal-imaging spectrum, characterised in that the radiating element of the flashing device is constructed as a flat plate (1), the radiating area of which is arranged in a vertical plane and which can be rotated about a vertical axis (2), driven by a motor.

2. Signalling device according to Claim 1, characterised in that the rotatable plate (1) is surrounded by a fixed shutter (17) arranged outside its range of rotation and covering a predetermined angle of radiation.

3. Signalling device according to Claim 2, characterised in that the shutter (17) consists of a strip of flexible, foldable material which is attached to tension rods (4.1 to 4.3) connected to a fixed holder for the rotatable plate (1).

4. Signalling device according to one of Claims 1 to 3, characterised in that, in the rotatable plate (1) on the side of the radiating area, an electrically heatable heating mat (9) is arranged, the connecting line of which, which is carried through the drive shaft of the plate (1), is connected to a power source via an electrically conductive rotary connection (7 - 15).

5. Signalling device according to one of Claims 1 to 4, characterised in that the holder of the rotatable plate (1) is constructed as retaining tube (3) which can be pushed onto the combat vehicle and in which an electric motor (5) is arranged, the output drive shaft (6) of which is connected to the input drive shaft for the plate (1), which is carried axially through the retaining tube (3) and emerges at its top end.

6. Signalling device according to Claim 5, characterised in that, between the retaining tube (3) and the drive shaft for the plate (1), an electric sensor device (13) is arranged which outputs an electric control signal which represents a measure of the rate of revolution of the plate (1) and is supplied to a control device.

**Revendications**

1. Dispositif de signalisation pour véhicules de combat en particulier pour chars de combat, comportant un dispositif clignotant qui émet des signaux exclusivement dans le spectre thermographique, caractérisé par le fait que l'élément rayonnement du dispositif clignotant est réalisé sous la forme d'une plaque plane (1) dont la face rayonnante est disposée dans un plan vertical et qui, entraînée par un moteur, peut tourner autour d'un axe vertical (2).

2. Dispositif de signalisation selon la revendication 1, caractérisé par le fait que la plaque rotative (1) est entourée d'un écran fixe (17) disposé à l'extérieur du champ de rotation de ladite plaque (1) et recouvrant un angle de rayonnement prédéterminé.

3. Dispositif de signalisation selon la revendication 2, caractérisé par le fait que l'écran (17) est constitué d'une bande en matière flexible pouvant être repliée qui est fixée sur des barres de tension (4.1 à 4.3) reliées à un support fixe de la plaque rotative (1).

4. Dispositif de signalisation selon l'une des revendications 1 à 3, caractérisé par le fait que dans la plaque rotative (1) sur le côté de la face rayonnante est disposée une nappe (9) pouvant être chauffée électriquement dont la conduite de raccordement passant à travers l'arbre d'entraînement de ladite plaque (1) est raccordée à une source énergétique par une connexion rotative (7-15) électriquement conductrice.

5. Dispositif de signalisation selon l'une des revendications 1 à 4, caractérisé par le fait que le support de la plaque rotative (1) est réalisé sous la forme d'un tube support (3) pouvant être emmanché sur le véhicule de combat, à l'intérieur dudit tube (3) étant disposé un moteur électrique (5) dont l'arbre de sortie (6) est relié à l'arbre d'entraînement de la plaque (1) passant axialement à travers ledit tube support (3) et sortant à l'extrémité supérieure de ce dernier.

6. Dispositif de signalisation selon la revendication 5, caractérisé par le fait que, entre le tube support (3) et l'arbre d'entraînement de la plaque (1) est disposé un dispositif détecteur électrique (13) qui émet un signal de commande électrique lequel représente une unité de mesure pour la fréquence de rotation de la plaque (1) et qui est amené vers un dispositif de commande.

FIG. 1

FIG. 2

**FIG. 3**